# EUROPÄISCHE PATENTSCHRIFT

(11) **EP 1 403 104 B1**
(45) Veröffentlichungstag und Bekanntmachung des Hinweises auf die Patenterteilung: **21.02.2007**
(21) Anmeldenummer: 03016270.5
(22) Anmeldetag: 18.07.2003
(51) Int. Cl.: B60G 21/10, B60G 21/055

(54) **Einstellbarer Drehstab-Stabilisator für Radaufhängung**
Adjustable suspension stabilizer bar
Barre stabilisatrice réglable pour suspension

(30) Priorität: 28.09.2002 DE 10245363
(43) Veröffentlichungstag der Anmeldung: 31.03.2004
(73) Patentinhaber: Dr.Ing. h.c.F. Porsche Aktiengesellschaft, 70435 Stuttgart (DE)
(72) Erfinder: Baum, Michael, 75233 Tiefenbronn-Lehningen (DE)

(56) Entgegenhaltungen:
- EP-A- 1 093 942
- EP-A- 1 157 865
- EP-A- 1 209 011
- DE-C- 19 923 100
- US-A- 4 648 620
- US-A- 5 251 926
- US-B1- 6 428 019

## Beschreibung

Die Erfindung betrifft einen schaltbaren Stabilisator für Kraftfahrzeuge nach dem Oberbegriff des Patentanspruchs 1.

Aus der DE 199 23 100 C1 ist bereits eine Stabilisator für ein Kraftfahrzeug bekannt geworden, bei dem zwischen zwei Stabilisatorteilen eine Schaltkupplung angeordnet ist. Die Schaltkupplung besteht aus zwei mit den Stabilisatorteilen verbundenen Mitnehmern, die in einer Radialebene angeordnet sind. Zwischen den Mitnehmern sind Zwischenräume gebildet, die durch ein verschiebbares Element ausgeführt werden können. Der eine Mitnehmer ist dabei unmittelbar an einem der Stabilisatorteile angeformt, während der andere Mitnehmer am Gehäuse angeordnet ist, das seinerseits drehfest mit dem anderen Stabilisatorteil verbunden ist.

Ausgehend von diesem Stand der Technik ist es Aufgabe der Erfindung, einen schaltbaren Stabilisator zu schaffen, der einfach herstellbar ist.

Diese Aufgabe wird erfindungsgemäß mit den Merkmalen des Patentanspruches 1 gelöst. Es wird vorgeschlagen, bei einem gattungsgemäßen schaltbaren Stabilisator die Kupplung so auszuführen, dass in einem gemeinsamen Gehäuse zwei gegeneinander bewegbarer Mitnehmer vorgesehen sind, die radial vorspringende Zapfen aufweisen. Diese Zapfen sind in ihrer Ruhelage so ausgerichtet, dass sie entlang einer Längsebene des Stabilisators fluchten. Jeder der Mitnehmer ist mit einem Stabilisatorteil drehfest verbunden. Ein im Gehäuse entlang der Gehäuse - Längsebene verschiebbar gehaltener Schieber ist mit Ausnehmungen zur Aufnahme der Zapfen der Mitnehmer versehen, also in Form einer Schaltkulisse gestaltet. Diese Ausnehmungen sind so gestaltet, dass in einer ersten Endposition des Schiebers beide Zapfen in Drehrichtung fixiert sind. In dieser ersten Endposition sind die Stabilisatorteile miteinander verbunden und der Stabilisator ist wirksam. In der zweiten Endposition des Schiebers ist die Ausnehmung so gestaltet, dass beide Zapfen über einen bestimmten Winkelbereich bewegbar sind. Die Ausnehmungen sind dabei so gestaltet, dass sich zwischen den beiden Endpositionen ein fließender Übergang ergibt. Die Schaltfunktion der Kupplung wird dadurch bewirkt, dass der Schieber fremdkraftbetätigt zwischen seinen Endpositionen hin- und herbewegt wird. In der zweiten Endposition können sich die Zapfen innerhalb der Ausnehmungen bewegen, so dass eine Relativbewegung der beiden Mitnehmer und damit der beiden Stabilisatorteile zueinander möglich ist. Innerhalb des von den Ausnehmungen vorgegebenen Winkel - Bewegungsbereiches der Zapfen sind damit die Stabilisatorteile nicht miteinander gekoppelt und der Stabilisator ist unwirksam.

Wird der Schieber aus der zweiten Endposition in seine erste Endposition fremdkraftbetätigt verschoben, so werden die Zapfen in ihre fluchende Ruhelage gebracht und dort schließlich bei Erreichen der ersten Endposition fixiert. Der stetige Übergang innerhalb der Ausnehmungen von der weiten Ausnehmungen in der zweiten Endposition ist zur engen, dem Außenmaß des Zapfen entsprechenden Ausnehmung in der ersten Endposition sorgt in vorteilhafter Weise dafür, dass auch in Fällen, in denen beim Auslösen der Bewegung des Schiebers aus der zweiten Endposition heraus die Zapfen nicht fluchtend zueinander ausgerichtet sind, die Zapfen mittels der Bewegung des Schiebers in eine fluchtende Lage gezwungen werden. Mit der Erfindung ist ein schaltbarer Stabilisator geschaffen, der aus wenigen, einfach herzustellenden Teilen besteht. Dadurch, dass eine beliebige Fremdkraft zur Bewegung des Schiebers verwendet werden kann, ist dieser schaltbare Stabilisator darüber hinaus an jede Umgebung bzw. Energiequelle anpassbar. Als Fremdkraftbetätigung kommen insbesondere eine hydraulische Betätigung und eine elektromechanische Betätigung in Frage.

Vorteilhafte Weiterbildungen der Erfindung sind in den Unteransprüchen beschrieben.

Es wird vorgeschlagen, das Gehäuse der Kupplung fliegend zu lagern. Auf diese Weise ist sichergestellt, dass der Schieber gleichmäßig belastet wird, wenn zu Beginn der Bewegung des Schiebers aus der zweiten Endposition heraus die Zapfen nicht fluchtend zueinander ausgerichtet sind.

Alternativ kann es vorgesehen sein, das Gehäuse der Kupplung karosseriefest zu lagern. In diesem Fall ist die Zufuhr von hydraulischem Druck oder elektrischer Energie zu einer am Gehäuse angebrachten Fremdkrafteinheit (Hydraulikzylinder oder elektrischer Getriebemotor) erleichtert, da die Zuleitungen keinen Bewegungen unterworfen sind.

Die Ausnehmungen im Schieber sind vorteilhafter Weise so gestaltet, dass sie in der zweiten Endposition des Schiebers den Zapfen einen Bewegungsbereich über einen Drehwinkel von +/- 20° erlauben. Die beiden Stabilisatorteile können somit in der zweiten Endposition des Schiebers um bis zu 40° gegeneinander verdreht werden, was für übliche Anwendungsfälle erfahrungsgemäß ausreicht. Die Begrenzung des Bewegungsbereiches sorgt andererseits dafür, dass ein übermäßiges Verdrehen der Stabilisatorteile zueinander und somit ein extrem ungleichmäßiges Einfedern der Radaufhängungen gegeneinander verhindert ist.

Für den Fall einer Fremdkraftbetätigung mit hydraulischem Druck wird vorgeschlagen, hierfür einen Hydraulikzylinder zu verwenden. Dieser Hydraulikzylinder ist einerseits am Gehäuse und andererseits am Schieber abgestützt.

Für den Fall einer alternativen elektromechanischen Betätigung wird vorgeschlagen, auf dem Schieber einen Elektromotor anzuordnen, der über eine Schneckenwelle einer Schneckenradmutter antreibt. In der Schneckenradmutter ist eine Gewindespindel aufgenommen, die endseits am Gehäuse befestigt ist.

Die Erfindung ist nachstehend anhand der in den Figuren dargestellten Ausführungsbeispiele näher erläutert. Es zeigen:
- Fig. 1: einen Hauptschnitt durch eine Kupplung mit einer hydraulischen Betätigung,
- Fig. 2: eine Draufsicht auf die Kupplung nach Fig. 1,
- Fig. 3: einen Schnitt nach der Linie III - III der Fig. 1,
- Fig. 4: eine alternative Ausführung der Kupplung mit einer elektromechanischen Betätigung, und
- Fig. 5: einen Schnitt nach der Linie V - V der Fig. 4.

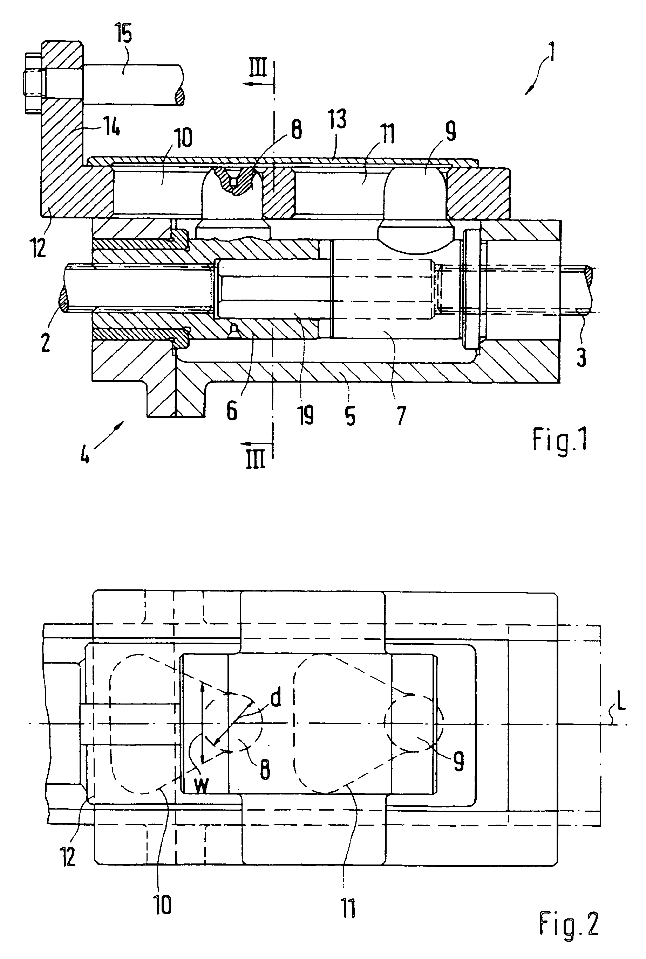

In Fig. 1 ist in einem Hauptschnitt ein mittlerer Bereiche eines an sich bekannten Stabilisators 1 dargestellt, der zwei zueinander fluchtend ausgerichtete Stabilisatorteile 2, 3 aufweist. Die Stabilisatorteile 2, 3 sind über eine schaltbare und formschließende Kupplung 4 miteinander verbunden, an der Karosserie gelagert gehalten und endseits jeweils an eine nicht gezeigten Radaufhängung angebunden. Eine solche prinzipielle Anordnung ist beispielsweise aus der DE 199 23 100 C1 bereits bekannt.

Die Kupplung 4 besteht aus einem Gehäuse 5, in dem zwei Mitnehmer 6, 7 gelagert sind. Jeder der Mitnehmer 6, 7 nimmt jeweils ein Ende der Stabilisatorteile 4, 5 auf. Die Mitnehmer 6, 7 sind mit radial vorspringenden Zapfen 8, 9 versehen, die in Ausnehmungen 10, 11 eines Schiebers 12 eingreifen. Ein Deckel 13 auf dem Schieber 12 deckt die Ausnehmungen 10 und 11 gegen Schmutz und Staub ab. Der Schieber 12 bildet zusammen mit seinen Ausnehmungen 10, 11 Schaltkulissen.

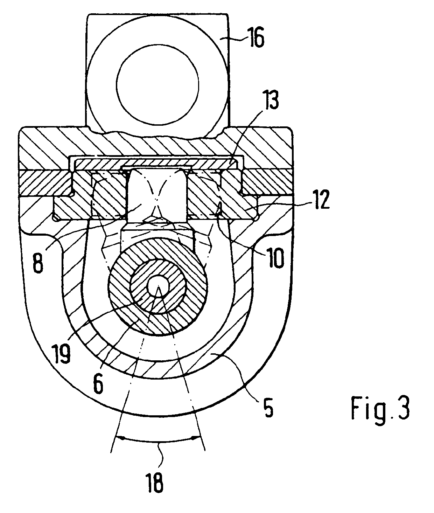

An einer Abstellung 14 des Schiebers 12 greift eine Kolbenstange 15 eines in Fig. 3 gezeigten Hydraulikzylinders 16 an.

Fig. 2 zeigt in einer Draufsicht den Schieber 12 in seiner ersten Endposition, in der die Mitnehmer 6, 7 gegeneinander verriegelt sind, so dass der Stabilisator 1 wirksam ist. In dieser ersten Endposition sind die Zapfen 8, 9 jeweils in einem Bereich der Ausnehmungen 10, 11 aufgenommen, dessen Weite w gerade dem Außendurchmesser d der Zapfen 8, 9 entspricht. Die Zapfen 8, 9 sind damit in ihrer dargestellten, fluchtenden Position fixiert.

Um den Schieber 12 aus seiner ersten Endposition in seine zweite Endposition zu bringen wird der Hydraulikzylinder 16 in der Weise mit Druck beaufschlagt, dass sich der Schieber 12 in Fig. 2 nach rechts bewegt. Die Ausnehmungen 10, 11 werden dadurch relativ zu den Zapfen 8, 9 verschoben und mit zunehmender Weite w der Ausnehmungen 10, 11 ergibt sich ein Drehbewegungsbereich für die Zapfen 8, 9.

Fig. 3 zeigt den Drehbewegungsbereich des Zapfens 8 in einem Schnitt nach der Linie III - III der Fig. 1. Innerhalb der Ausnehmung 10 kann sich der Zapfen 8 so bewegen, dass der zugehörige Mitnehmer 6 über einen Winkel 18 von +/- 20 ° bewegbar ist. Der Kopfbereich des Zapfens 8 ist dabei so gestaltet, dass bei der Anlage an der Innenseite der Ausnehmung 10 keine Kantenberührung entsteht. Der Zapfen 9 ist in der Ausnehmung 11 in gleicher Weise bewegbar.

Ein konzentrisch in beide Mitnehmer 6, 7 eingesteckter Hohlbolzen 19 bewirkt in vorteilhafter Weise, dass auch bei hohen Stellkräften die Mitnehmer 6, 7 stets fluchtend zueinander ausgerichtet sind. Derartige Stellkräfte treten besonders dann auf, wenn die Zapfen 8, 9 bei einer Bewegung des Schiebers aus der zweiten Endposition in die erste Endposition in eine zueinander fluchtende Stellung gebracht werden müssen, in der sie auf einer Längsachse L der Kupplung 4 zu liegen kommen.

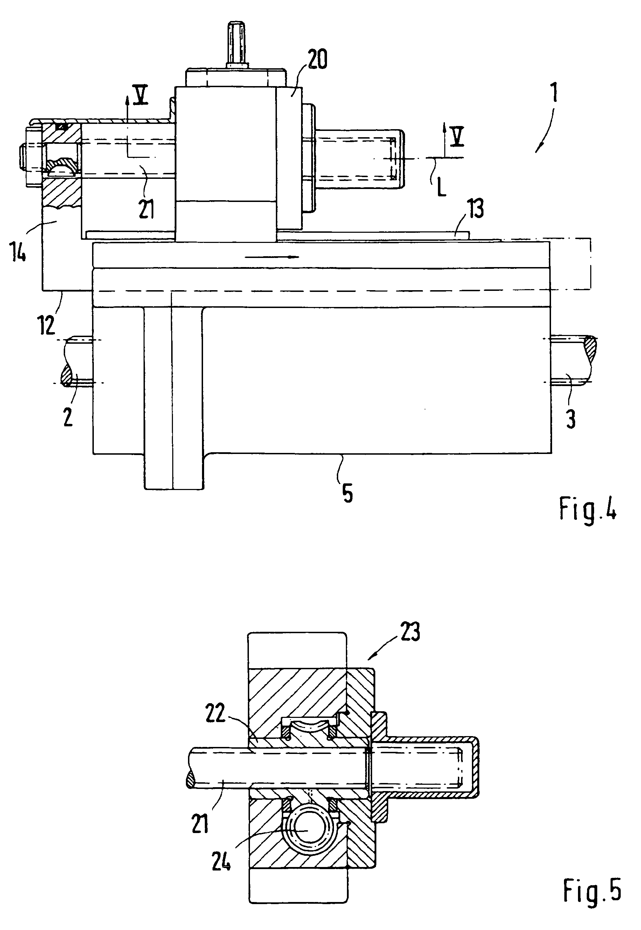

Fig. 4 zeigt eine alternative Ausführung, bei der der Hydraulikzylinder 16 durch einen Getriebemotor 20 ersetzt ist. An der Abstellung 14 des Schiebers 12 greift eine Gewindespindel 21 an, die vom Getriebemotor 20 bewegt wird.

Fig. 5 zeigt in einem Schnitt nach der Linie V - V der Fig. 4 die Aufnahme der Gewindespindel 21 im Getriebemotor 20. Der Getriebemotor 20 besteht aus einer Schneckenradmutter 22, die in einem Getriebegehäuse 23 drehbar gelagert ist. Die Schneckenradmutter 22 wird von einer Schnecke 24 eines nicht näher gezeigten Elektromotors angetrieben. Bei einer Drehung der Schneckenradmutter 22 bewegt sich diese entlang der Längsachse L auf der Gewindespindel 21. Da das Getriebegehäuse 23 mit dem Gehäuse 5 verbunden ist, führt diese Bewegung zu einer Bewegung des Schiebers 12 im Gehäuse 5. Der Schieber 12 wird auf diese Weise zwischen seiner ersten und zweiten Endposition hin - und herbewegt.

## Patentansprüche

1. Stabilisator für ein Kraftfahrzeug, bestehend aus zwei zueinander fluchtend ausgerichteten Stabilisatorteilen (2, 3), die jeweils einerseits mit der Radaufhängung eines Rades und andererseits über eine Lagerstelle mit der Karosserie verbunden sind, wobei beide Stabilisatorteile über eine schaltbare und formschließende Kupplung (4) miteinander verbindbar sind, **dadurch gekennzeichnet, dass**
- die Kupplung (4) zwei gegeneinander bewegbare, fluchtende Mitnehmer (6, 7) in einem gemeinsamen Gehäuse (5) aufweist,
- die Mitnehmer (6, 7) jeweils mit einem Stabilisatorteil (2, 3) drehfest verbunden sind,
- die Mitnehmer radial vorspringende Zapfen (8, 9) aufweisen, die in ihrer Ruhelage in einer Längsebene (L) fluchtend zu liegen kommen,
- ein im Gehäuse (5) geführter Schieber (12) Ausnehmungen (10, 11) zur Aufnahme der Zapfen (8, 9) aufweist und
- die Ausnehmungen (10, 11) in einer ersten Endposition des Schiebers die Zapfen (8, 9) festsetzen und in einer zweiten Endposition des Schiebers die Zapfen über einen vorbestimmten Winkelbereich freigeben.

2. Stabilisator nach Anspruch 1, **dadurch gekennzeichnet, dass** das Gehäuse (5) in Bezug auf eine Karosserie des Fahrzeuges fliegend gelagert ist

3. Stabilisator nach Anspruch 1, **dadurch gekennzeichnet, dass** das Gehäuse (5) in Bezug auf eine Karosserie des Fahrzeuges fest gelagert ist.

4. Stabilisator nach einem der Ansprüche 1 bis 3, **dadurch gekennzeichnet, dass** der Winkelbereich im wesentlichen +/- 20° beträgt.

5. Stabilisator nach einem der Ansprüche 1 bis 4, **dadurch gekennzeichnet, dass** am Gehäuse ein Hydraulikzylinder (16) gehalten ist, der mit seiner Kolbenstange (15) auf den Schieber (12) wirkt.

6. Stabilisator nach einem der Ansprüche 1 bis 4, **dadurch gekennzeichnet, dass** auf dem Gehäuse ein Getriebemotor (20) gehalten ist, dessen Gewindespindel (21) auf den Schieber (12) wirkt.

## Claims

1. A stabilizer for a motor vehicle, comprising two stabilizer parts (2, 3) which are orientated in alignment with each other and which are connected in each case to the suspension of a wheel on the one hand and, by way of a bearing point, to the bodywork on the other hand, wherein the two stabilizer parts are capable of being connected to each other by way of a coupling (4) which engages and disengages in a positively locking manner, **characterized in that**
- the coupling (4) has two aligned entrainment means (6, 7) movable towards each other in a common housing (5),
- the entrainment means (6, 7) are connected to one stabilizer part (2, 3) in a rotationally fixed manner in each case;
- the entrainment means have pins (8, 9) which project radially and which in their rest position come to be in alignment in a longitudinal plane (L),
- a slide (12) guided in the housing (5) has recesses (10, 11) for receiving the pins (8, 9), and
- the recesses (10, 11) fix the pins (8, 9) in a first end position of the slide and release the pins over a pre-determined angular range in a second end position of the slide.

2. A stabilizer according to Claim 1, **characterized in that** the housing (5) is mounted in a cantilevered manner with respect to a bodywork of the vehicle.

3. A stabilizer according to Claim 1, **characterized in that** the housing (5) is mounted in a fixed manner with respect to a bodywork of the vehicle.

4. A stabilizer according to any one of Claims 1 to 3, **characterized in that** the angular range amounts to substantially +/-20°.

5. A stabilizer according to any one of Claims 1 to 4, **characterized in that** an hydraulic cylinder (16), which acts with its piston rod (15) upon the slide (12), is held on the housing.

6. A stabilizer according to any one of Claims 1 to 4, **characterized in that** a geared motor (20), the threaded spindle (21) of which acts upon the slide (12), is held on the housing.

## Revendications

1. Stabilisateur pour un véhicule automobile constitué de deux parties stabilisatrices (2, 3) orientées en alignement l'une sur l'autre qui sont respectivement raccordées, d'une part, à la suspension d'une roue et, d'autre part, à la carrosserie par l'intermédiaire d'un point d'appui, les deux parties stabilisatrices pouvant être reliées l'une à l'autre par l'intermédiaire d'un embrayage à engagement positif (4), **caractérisé en ce que**
- l'embrayage (4) comporte deux organes d'entraînement (6, 7) alignés, déplaçables l'un par rapport à l'autre, dans un carter commun (5),
- les organes d'entraînement (6, 7) sont respectivement reliés à une partie stabilisatrice (2, 3) de manière à être solidaires en à la rotation avec celle-ci,
- les organes d'entraînement comportent des tenons (8, 9) faisant saillie radialement qui, dans leur position de repos, se trouvent alignés l'une sur l'autre dans un plan longitudinal (L),
- un coulisseau (12) guidé dans le carter (5) et qui comporte des évidements (10, 11) pour le logement des tenons (8, 9) et
- les évidements (10, 11) immobilisent les tenons (8, 9) dans une première position d'extrémité du coulisseau et libèrent les tenons sur une plage angulaire prédéterminée dans une seconde position d'extrémité du coulisseau.

2. Stabilisateur selon la revendication 1, **caractérisé en ce que** le carter (5) est logé de manière flottant par rapport à une carrosserie du véhicule automobile.

3. Stabilisateur selon la revendication 1, **caractérisé en ce que** le carter (5) est logé de manière fixe par rapport à une carrosserie du véhicule automobile.

4. Stabilisateur selon l'une quelconque des revendications 1 à 3, **caractérisé en ce que** la plage angulaire est sensiblement de +/- 20°.

5. Stabilisateur selon l'une quelconque des revendications 1 à 4, **caractérisé en ce qu'**un vérin hydraulique (16), qui agit sur le coulisseau (12) avec sa tige de piston (15), est fixé au carter.

6. Stabilisateur selon l'une quelconque des revendications 1 à 4, **caractérisé en ce qu'**un moto-réducteur (20), dont l'arbre fileté (21) agit sur le coulisseau (12), est fixé sur le carter.
